# EUROPEAN PATENT APPLICATION

(11) **EP 2 372 967 A1**
(43) Date of publication of application: **05.10.2011**
(21) Application number: 09834082.1
(22) Date of filing: 21.12.2009
(51) Int. Cl.: H04L 29/06

(54) **REGISTRATION METHOD, OUTBOUND-PROXY EQUIPMENT AND COMMUNICATION SYSTEM**

(30) Priority: 22.12.2008 CN 200810186518
(71) Applicant: Huawei Technologies Co., Ltd., Shenzhen, Guangdong 518129 (CN)
(72) Inventor: YANG, Yujie, Shenzhen Guangdong 518129 (CN)
(74) Representative: Thun, Clemens
(86) International application number: PCT/CN2009/075745
(87) International publication number: WO 2010/072129

(57) **Abstract**

A registration method, an Outbound-Proxy, and a communication system are disclosed. In the technical solution under the present invention, the Outbound-Proxy receives a re-registration request sent by the terminal, and judges, according to the re-registration request, whether re-registration with the core network element is required; if determining that re-registration is required, the Outbound-Proxy modifies the user registration duration carried in the re-registration request to the preset core network registration duration, namely, to the registration duration which is longer, and then sends the modified re-registration request to the core network element to perform re-registration, therefore reducing the information amount of the re-registration requests received by the core network element, and slashing the load on the core network element caused by frequent re-registration of the terminal.

## Description

This application claims priority to Chinese Patent Application No. 200810186518.3, filed with the Chinese Patent Office on December 22, 2008 and entitled "Registration Method, Outbound-Proxy and Communication System", which is incorporated herein by reference in its entirety.

### FIELD OF THE INVENTION

The present invention relates to communications technologies, and in particular, to a registration method, an Outbound-Proxy, and a communication system.

### BACKGROUND OF THE INVENTION

In an IP Multimedia Subsystem (IMS) network, the terminals located in the same home domain access the IMS domain through different Outbound-Proxies in a visited domain, for example, through a Proxy Call Session Control Function (P-CSCF), and register with a core network element such as a Serving Call Session Control Function (S-CSCF). Meanwhile, the terminal initiates re-registration periodically after the registration. Many terminals initiate re-registration frequently for the purpose of Network Address Translation (NAT) keep-alive or other purposes, which leads to a great increase of the re-registration messages processed by the core network element and becomes a performance bottleneck of the core network element.

A solution to the performance bottleneck of the core network element caused by frequent re-registration of the terminal in the prior art is: The core network element checks the registration duration carried in the re-registration message, and judges whether the registration duration is less than the minimum registration duration acceptable to the core network element; if so, the core network element returns a "423" message to the terminal, where the message carries the minimum registration duration acceptable to the core network element and instructs the terminal to perform re-registration according to the minimum registration duration returned by the core network element. In this process, the Outbound-Proxy is responsible for forwarding information between the terminal and the core network element.

In the process of researching and practicing the prior art, the inventor finds that the solution put forward in the prior art requires the terminal to support the "423" message and requires the terminal to initiate re-registration again according to the minimum registration duration carried in the "423" message. If the terminal does not support the "423" message or the terminal initiates malicious re-registration frequently, namely, if the re-registration frequency is high but is not so high that attack prevention is required, plenty of re-registration messages still arrive at the core network element. Therefore, the load on the core network element is still heavy.

### SUMMARY OF THE INVENTION

The embodiments of the present invention provide a registration method, an Outbound-Proxy and a communication system to relieve the load on a core network element when a terminal initiates re-registration frequently in an IMS network. The method is applicable to all types of terminal.

A registration method includes:
receiving a re-registration request sent by a terminal, wherein the re-registration request carries a user registration duration;
judging, according to the re-registration request, whether re-registration with a core network element is required;
if re-registration with the core network element is required, modifying the user registration duration carried in the re-registration request to a core network registration duration which is preset, sending the modified re-registration request to the core network element, and receiving a response message returned by the core network element and forwarding the response message to the terminal; and
if re-registration with the core network element is not required, returning a response message to the terminal.

An Outbound-Proxy includes:
a re-registration receiving unit, adapted to receive a re-registration request sent by a terminal, wherein the re-registration request carries a user registration duration;
a re-registration judging unit, adapted to judge, according to the re-registration request received by the re-registration receiving unit, whether re-registration with a core network element is required;
a re-registration processing unit, adapted to: if the re-registration judging unit determines that re-registration with the core network element is required, modify the user registration duration carried in the re-registration request to a core network registration duration which is preset, send the modified re-registration request to the core network element, and receive a response message returned by the core network element and forward the response message to the terminal; and
a re-registration sending unit, adapted to return a response message to the terminal if the re-registration judging unit determines that re-registration with the core network element is not required.

A communication system includes any Outbound-Proxy provided in an embodiment of the present invention.

In the embodiments of the present invention, the Outbound-Proxy receives a re-registration request sent by the terminal, and judges, according to the re-registration request received by the re-registration receiving unit, whether re-registration with the core network element is required; if determining that re-registration is required, the Outbound-Proxy modifies the user registration duration carried in the re-registration request to the preset core network registration duration, namely, to the registration duration which is longer, and then sends the modified re-registration request to the core network element to perform re-registration, therefore reducing the information amount of the re-registration requests received by the core network element, and slashing the load on the core network element caused by frequent re-registration of the terminal.

### BRIEF DESCRIPTION OF THE DRAWINGS

To describe the technical solution under the present invention more clearly, the following describes the accompanying drawings involved in the embodiments of the present invention. Apparently, the accompanying drawings described in the following are exemplary only, and persons of ordinary skill in the art may derive other drawings from such accompanying drawings without any creative effort.
FIG. 1 is a flowchart of a re-registration method provided in a first embodiment of the present invention;
FIG. 2 is a flowchart of a re-registration method provided in a second embodiment of the present invention;
FIG. 3 is a flowchart of an initial registration method provided in a third embodiment of the present invention;
FIG. 4 shows a structure of an Outbound-Proxy provided in a fourth embodiment of the present invention;
FIG. 5 shows a structure of a re-registration processing unit provided in the fourth embodiment of the present invention; and
FIG. 6 shows a structure of an initial registration processing unit provided in the fourth embodiment of the present invention.

### DETAILED DESCRIPTION OF THE EMBODIMENTS

The following detailed description is provided with reference to the accompanying drawings to provide a thorough understanding of the present invention. Obviously, the embodiments described are merely exemplary embodiments of the present invention, and the invention is not limited to such embodiments. All other embodiments, which can be derived by those skilled in the art from the embodiments given herein without any creative effort, shall fall within the protection scope of the present invention.

A registration method, an Outbound-Proxy, and a communication system are provided in the embodiments of the present invention, as detailed below.

### Embodiment 1

This embodiment is described with respect to an Outbound-Proxy.

A registration method provided in this embodiment includes: An Outbound-Proxy receives a re-registration request sent by a terminal, and judges, according to the re-registration request received by the re-registration receiving unit, whether re-registration with a core network element is required; if so, the Outbound-Proxy modifies the user registration duration carried in the re-registration request to a core network registration duration which is preset, sends the modified re-registration request to the core network element, and receives a response message returned by the core network element and forwards the response message to the terminal; or if not, the Outbound-Proxy returns a response message to the terminal directly.

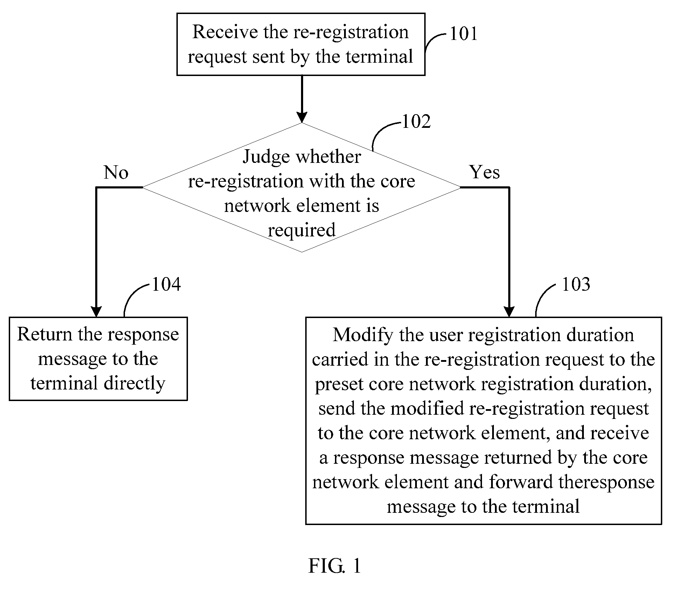

FIG. 1 is a flowchart of the re-registration method provided in this embodiment. The method includes the following steps:
101. The Outbound-Proxy receives a re-registration request sent by a terminal, where the re-registration request carries a user registration duration.
102. The Outbound-Proxy judges, according to the re-registration request, whether re-registration with a core network element is required; if so, the procedure proceeds to step 103; if not, the procedure proceeds to step 104.

This embodiment provides multiple judgment methods:
Method 1: A fixed duration is set, and the fixed duration is equal to the core network registration duration or equal to the core network registration duration minus a margin. The Outbound-Proxy checks whether the duration between the previous core network registration to the current re-registration is greater than the preset fixed duration. If so, the Outbound-Proxy determines that re-registration with the core network element is required; if not, the re-registration with the core network element is not required. For example, the fixed duration may be monitored by a timer, and the timer is started upon success of initial registration or re-registration of a user. After the user initiates re-registration again, the Outbound-Proxy checks whether the current duration counted by the timer is greater than the fixed duration; if so, the Outbound-Proxy determines that re-registration with the core network element is required, and the timer is reset to zero to start counting time again after success of the re-registration; if not, the Outbound-Proxy determines that re-registration with the core network element is not required.
Method 2: A judgment is made about whether a sum of the user registration duration carried in the re-registration request and the time counted on the timer is greater than the preset core network registration duration; if so, it indicates that the re-registration with the core network element is required; if not, it indicates that re-registration with the core network element is not required. The timer is started when the timer succeeds in initially registering on the terminal, and the timer is reset to zero to count time again after success of each re-registration.

A margin may be set on the basis of method 2, and the judgment method is to judge whether a sum of the user registration duration carried in the re-registration request, the time counted on the timer, and the margin is greater than the preset core network registration duration.

Method 3: A judgment is made about whether the user registration duration carried in the re-registration request is greater than a duration counted on the timer; if so, it indicates that the re-registration with the core network element is required; if not, it indicates that re-registration with the core network element is not required. The timer is a decreasing timer, and the initial duration may be set to the core network registration duration or the difference between the core network registration duration and a margin. The timer starts counting down when the timer succeeds in initially registering on the terminal, and the initial duration of the timer is reset after success of each re-registration.

In the preceding methods, the margin may be set or configured according to a policy of an operator. By addition or subtraction of a margin, the following problem is mitigated: The re-registration interval of the terminal is too long, which causes the core network registration duration expires, and therefore a terminal state changes to a deregistered state.

103. The Outbound-Proxy modifies the user registration duration carried in the re-registration request to the preset core network registration duration, sends the modified re-registration request to the core network element, and receives a response message returned by the core network element and forwards the response message to the terminal.

After the Outbound-Proxy receives the response message returned by the core network element, the response message carries the core network registration duration. At this time, the Outbound-Proxy may send a response message that carries the core network registration duration to the terminal. Furthermore, the terminal may perform re-registration according to the core network registration duration carried in the response message, therefore reducing the attempts of re-registration initiated by the terminal and relieving the load on the Outbound-Proxy. Alternatively, the core network registration duration carried in the response message may be modified to the user registration duration originally carried in the re-registration request, which ensures stability of the terminal performance without affecting the frequency of re-registration of the terminal. However, this requires that the user registration duration should be recorded beforehand. Therefore, after step 101, namely, after receiving the re-registration request sent by the terminal, the Outbound-Proxy may record the user registration duration carried in the re-registration request.

104. The Outbound-Proxy returns a response message such as a 200 response message to the terminal directly.

It should be noted that the Outbound-Proxy may be a P-CSCF, a Session Border Controller (SBC), an Interconnect Bounder Control Function (IBCF) or another network element that is capable of implementing similar functions; the core network element may be an S-CSCF, an Application System (AS), or a combination of the S-CSCF and other network elements, or may be another network element capable of implementing registration. The present invention specifies no special requirements on the core network element.

In conclusion, in this embodiment, an Outbound-Proxy receives a re-registration request sent by the terminal, and judges, according to the re-registration request, whether re-registration with the core network element is required; if determining that re-registration is required, the Outbound-Proxy modifies the user registration duration carried in the re-registration request to the preset core network registration duration, namely, to the registration duration which is longer, and then sends the modified re-registration request to the core network element to perform re-registration, therefore reducing the signaling traffic between the Outbound-Proxy and the core network element, namely, reducing the information amount of the re-registration requests received by the core network element, and slashing the load on the core network element caused by frequent re-registration of the terminal. In addition, because the response message returned to the terminal is an ordinary response message such as a 200 response message, no special requirement is imposed on the terminal.

### Embodiment 2

Based on the method described in the first embodiment, the following describes the second embodiment, assuming the core network element is an S-CSCF and the Outbound-Proxy is a P-CSCF.

First, the P-CSCF receives a re-registration request sent by the terminal, and judges whether the sum of the user registration duration carried in the re-registration request and the time counted on the timer is greater than the preset core network registration duration; if so, the P-CSCF modifies the user registration duration carried in the re-registration request to the preset core network registration duration, then sends the modified re-registration request to the core network element, and finally receives a response message returned by the core network element and forwards the response message to the terminal; if not, the P-CSCF returns a response message to the terminal directly. The timer is started when the timer succeeds in initially registering on the terminal, and the timer is reset to zero to count time again after success of each re-registration.

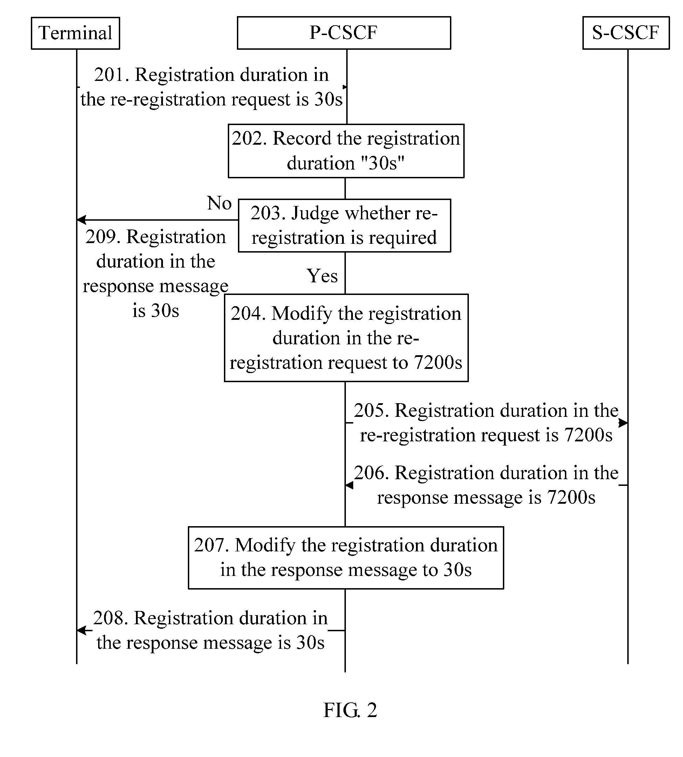

As shown in FIG. 2, the re-registration procedure may be as follows:
201. The terminal sends a re-registration request to the P-CSCF. The re-registration request carries an expire header field, namely, a user registration duration. In the following description, it is assumed that the registration duration identified by the expire header field is 30s.
202. After receiving the re-registration request, the P-CSCF may record the registration duration identified by the expire header field, namely, 30s. For example, the registration duration identified by the expire header field may be stored in a memory storing the user registration duration. However, to save the storage space, the locally stored user registration duration may be updated directly, namely, the registration duration identified by the expire header field carried in the re-registration request overwrites the user registration duration recorded in the previous registration.
203. The P-CSCF judges, according to the re-registration request, whether re-registration with the S-CSCF is required; if so, the procedure proceeds to step 204; if not, the procedure proceeds to step 209. The judgment method is as follows:

The P-CSCF judges whether the sum of the registration duration (30s) identified by the expire header field carried in the re-registration request and the time counted on the timer is greater than the preset core network registration duration; if so, it indicates that the re-registration with the S-CSCF is required; if not, it indicates that re-registration with the S-CSCF is not required. The timer is started when the timer succeeds in initially registering on the terminal. The initial value of the timer is set to 0. The timer is an increasing timer, and is reset to zero to start counting time again after success of each re-registration.

For example, it is assumed that the core network registration duration is 7200s (the same is applicable hereinafter). At this time, if the time counted on the timer is 12s, because the sum of 30s and 12s is less than 7200s, re-registration with the S-CSCF is not required, and the procedure proceeds to step 209; if the time counted on the timer is 7180s, because the sum of 30s and 7180s is greater than 7200s, re-registration with the S-CSCF is required, and the procedure proceeds to step 204. In this embodiment, a margin such as 50s may be set, and the judging method is: The P-CSCF judges whether the sum of the registration duration (30s) identified by the expire header field carried in the re-registration request, the time counted on the timer, and the margin is greater than the preset core network registration duration.

The judging method may be other methods described in the first embodiment. For example, a fixed duration is set, and the fixed duration is equal to the core network registration duration (7200s). The Outbound-Proxy checks whether the duration between the previous core network registration to the current re-registration is greater than the preset fixed duration (7200s). If so, the Outbound-Proxy determines that re-registration with the core network element is required; if not, the re-registration with the core network element is not required. For example, the fixed duration may be monitored by a timer, and the timer is started upon success of initial registration or re-registration of a user. After the user initiates re-registration again, the Outbound-Proxy checks whether the current time counted by the timer is greater than the fixed duration (7200s); if so, the Outbound-Proxy determines that re-registration with the core network element is required, and the timer is reset to zero to start counting time again after success of the re-registration; if not, the Outbound-Proxy determines that re-registration with the core network element is not required. A margin such as 50s may be set, and the fixed duration is set to the difference between the core network registration duration (7200s) and the margin (50s), namely, 7150s. The Outbound-Proxy judges whether the registration with the core network element is required by comparing the current time counted on the timer with the fixed duration (7150s).

A decreasing timer may be used for judgment. The initial duration of a timer may be set to the core network registration duration (7200s) or the difference between the core network registration duration (7200s) and the margin (50s). The Outbound-Proxy judges whether the user registration duration (30s) carried in the re-registration request is greater than the duration counted on the timer; if so, it indicates that the re-registration with the core network element is required; if not, it indicates that re-registration with the core network element is not required. The timer is a decreasing timer, and the initial duration may be set to the core network registration duration or the difference between the core network registration duration and the margin. The timer starts counting down when the timer succeeds in initially registering on the terminal, and the initial duration of the timer is reset after success of each re-registration.

204. The P-CSCF modifies the registration duration (30s) identified by the expire header field carried in the re-registration request to the preset core network registration duration (7200s).

205. The P-CSCF sends the modified re-registration request to the S-CSCF. The registration duration identified by the expire header field carried in the modified re-registration request is 7200s.

206. The S-CSCF returns a response message such as a 200 response message to the P-CSCF.

The registration time identified by the expire header field carried in the response message returned by the S-CSCF is consistent with the registration time identified by the expire header field carried in the re-registration request received by the S-CSCF, namely, in step 204, the P-CSCF modifies the registration duration identified by the expire header field carried in the re-registration request to the preset core network registration duration. Therefore, the registration time identified by the expire header field carried in the response message is the core network registration duration, namely, 7200s.

207. After receiving the response message returned by the S-CSCF, the P-CSCF may modify the registration duration (7200s) identified by the expire header field carried in the response message to the registration duration (30s) identified by the expire header field carried in the original re-registration request to prevent affecting the frequency of re-registration of the terminal and ensure stability of performance of the terminal. Here, the P-CSCF may send the response message that carries the core network registration duration to the user terminal directly. In this case, step 202 is optional.

208. The P-CSCF sends the modified response message to the terminal, therefore finishing the re-registration process.

209. The P-CSCF returns a response message such as a 200 response message to the terminal directly.

It should be noted that, in the embodiment, the core network element is an S-CSCF and the Outbound-Proxy is a P-CSCF. In practice, the core network element may be an AS, a combination of the S-CSCF and other network elements, or another network element capable of implementing registration; and the Outbound-Proxy may be an SBC, an IBCF, or other network elements that are capable of implementing similar functions. In addition, the core network registration duration may be set on the core network element according to a policy of an operator, and then the Outbound-Proxy obtains the core network registration duration from the core network element. To reduce the signaling traffic between the Outbound-Proxy and the core network element, the Outbound-Proxy may not obtain the core network registration duration from the core network element, but the core network registration duration is preset on the Outbound-Proxy manually. Generally, the core network registration duration is generally greater than or equal to the user registration duration.

In addition, the core network registration duration includes the registration duration of initial registration and registration duration of re-registration. Generally, the registration duration of re-registration is half of the registration duration of initial registration. The core network registration duration mentioned in this embodiment may be the registration duration of initial registration or registration duration of re-registration, depending on a specific scenario.

In conclusion, in this embodiment, the P-CSCF receives a re-registration request sent by the terminal, and judges whether re-registration with the S-CSCF is required according to the expire header field carried in the re-registration request; if determining that re-registration is required, the P-CSCF modifies the registration duration identified by the expire header field carried in the re-registration request to the preset core network registration duration, namely, to the registration duration which is longer, and then sends the modified re-registration request to the S-CSCF to perform re-registration, therefore reducing the signaling traffic between the P-CSCF and the S-CSCF, namely, reducing the information amount of the re-registration requests received by the S-CSCF, and slashing the load on the S-CSCF caused by frequent re-registration of the terminal. In addition, because the response message returned to the terminal is an ordinary response message such as a 200 response message, no special requirement is imposed on the terminal.

In addition, because the P-CSCF can modify the registration duration identified by the expire header field carried in the response message returned by the S-CSCF to the registration duration identified by the expire header field carried in the original re-registration request and then send the modified response message to the terminal, the impact on the frequency of re-registration of the terminal is avoided, and the performance of the terminal is maintained. The solution provided in this embodiment involves no change to the terminal.

### Embodiment 3

The first embodiment and the second embodiment describe the re-registration process in detail. To further reduce the information amount of the core network element and relieve the load on it, the third embodiment improves the initial registration procedure, as detailed below.

First, the Outbound-Proxy receives an initial re-registration request sent by the terminal, and judges whether the user registration duration carried in the initial registration request is less than the preset core network registration duration; if so, the Outbound-Proxy modifies the user registration duration carried in the initial registration request to the core network registration duration, then sends the modified initial registration request to the core network element; if not, the Outbound-Proxy forwards the initial registration request to the core network element; finally, the Outbound-Proxy receives a response message that indicates success and is returned by the core network element, and forwards the response message to the terminal.

After receiving the initial registration request, the Outbound-Proxy may record the user registration duration carried in the initial registration request. In this way, after receiving the response message that indicates success and is returned by the core network element, the Outbound-Proxy may modify the core network registration duration carried in the response message to the recorded user registration duration, and then forward the response message to the terminal, therefore avoiding the impact on the frequency of subsequent re-registration of the terminal, namely, keeping the existing registration duration of the terminal.

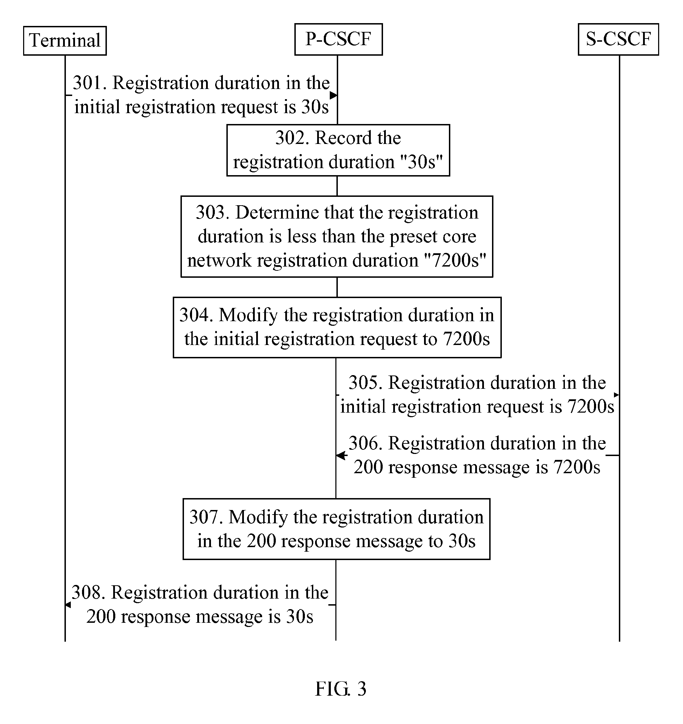

In the following detailed description, it is assumed that the core network element is an S-CSCF and that the Outbound-Proxy is a P-CSCF. As shown in FIG. 3, the initial registration procedure may be as follows:

301. The terminal sends an initial registration request to the P-CSCF. The initial registration request carries an expire header field, namely, a user registration duration. In the following description, it is assumed that the registration duration identified by the expire header field is 30s.

302. After receiving the initial registration request, the P-CSCF may record the registration duration identified by the expire header field carried in the initial registration request, namely, 30s.

303. The P-CSCF judges whether the user registration duration carried in the initial registration request is less than the preset core network registration duration; if so, the procedure proceeds to step 304; if not, the P-CSCF forwards the initial registration request to the S-CSCF directly, and receives a response message such as a 200 response message returned by the S-CSCF and forwards the response message to the terminal, therefore finishing the initial registration.

The core network registration duration may be preset according to the policy of the operator. Generally, the core network registration duration is greater than or equal to the user registration duration. But it is still possible that the user registration duration is greater than the core network registration duration.

For example, assuming that the core network registration duration is 7200s (the same is applicable hereinafter), because 30s is less than 7200s, it is determined that the user registration duration carried in the initial registration request is less than the preset core network registration duration, and step 304 is performed.

304. The P-CSCF modifies the registration duration (30s) identified by the expire header field carried in the initial registration request to the preset core network registration duration (7200s).

305. The P-CSCF sends the modified initial registration request to the S-CSCF. The registration duration identified by the expire header field carried in the modified initial registration request is 7200s.

306. If the initial registration succeeds, the S-CSCF returns a response message such as a 200 response message indicating success to the P-CSCF (in the following description, it is still assumed that the response message indicating success is a 200 response message).

The registration time identified by the expire header field carried in the 200 response message returned by the S-CSCF is consistent with the registration time identified by the expire header field carried in the initial registration request received by the S-CSCF, namely, in step 304, the P-CSCF modifies the registration duration identified by the expire header field carried in the initial registration request to the preset core network registration duration. Therefore, the registration time identified by the expire header field carried in the 200 response message is the core network registration duration, namely, 7200s.

307. After receiving the 200 response message returned by the S-CSCF, the P-CSCF starts a timer to count time. The P-CSCF may modify the registration duration (7200s) identified by the expire header field carried in the 200 response message to the registration duration (30s) identified by the expire header field carried in the original initial registration request to prevent affecting the frequency of subsequent re-registration of the terminal and ensure stability of performance of the terminal.

308. The P-CSCF sends the modified 200 response message to the terminal, therefore finishing the initial registration process.

After success of the initial registration, the terminal initiates a re-registration request periodically to keep the link active or for other purposes. To restrict the frequency of sending re-registration messages subsequently, the P-CSCF may start a timer after success of registration of the terminal. The method of setting the timer depends on the mode of subsequent judgment. For the detailed setting method. For a specific setting method, refer to the detailed description about various judgment methods in the embodiments above.

For the processing of the re-registration request initiated by the terminal, refer to the first embodiment and the second embodiment above.

In conclusion, in the initial registration of the terminal, the Outbound-Proxy may check the received initial registration request. If determining that the user registration duration carried in the initial registration request is less than the preset core network registration duration, the Outbound-Proxy modifies the user registration duration carried in the initial registration request to the core network registration duration, and then forwards the request to the core network element, therefore prolonging the user registration duration stored in the core network element and getting ready for processing the re-registration request sent by the terminal subsequently at intervals, reducing the information amount of re-registration requests received by the core network element subsequently and relieving the load on the core network element.

### Embodiment 4

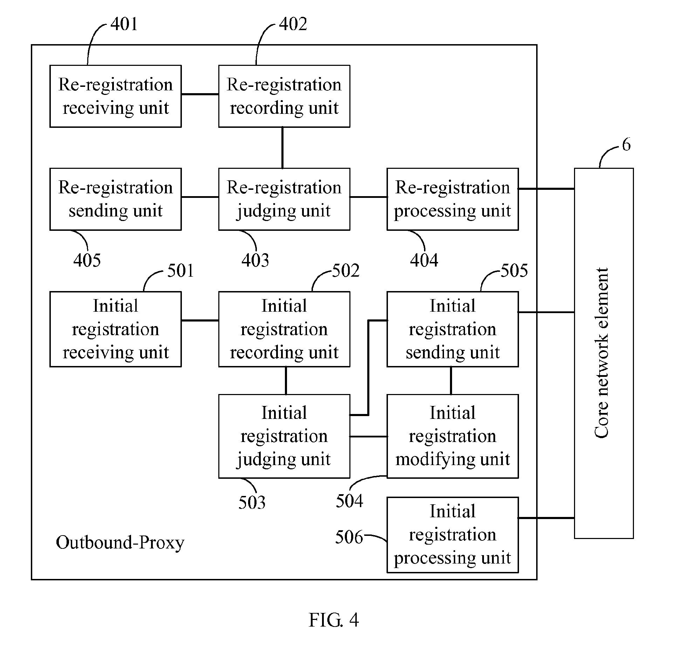

For better implementation of the preceding methods, the embodiment provides an Outbound-Proxy. As shown in FIG. 4, the Outbound-Proxy includes:
a re-registration receiving unit 401, adapted to receive a re-registration request sent by a terminal, where the re-registration request carries a user registration duration;
a re-registration judging unit 403, adapted to judge according to the re-registration request received by the re-registration receiving unit 401, whether re-registration with a core network element is required;
a re-registration processing unit 404, adapted to: if the re-registration judging unit 403 determines that re-registration with the core network element is required, modify the user registration duration carried in the re-registration request to a core network registration duration which is preset, send the modified re-registration request to the core network element, and receive a response message returned by the core network element and forward the response message to the terminal; and
a re-registration sending unit 405, adapted to return a response message to the terminal if the re-registration judging unit 403 determines that re-registration with the core network element is not required.

The Outbound-Proxy may further include:
a re-registration recording unit 402, adapted to record the user registration duration carried in the re-registration request received by the re-registration receiving unit 401.

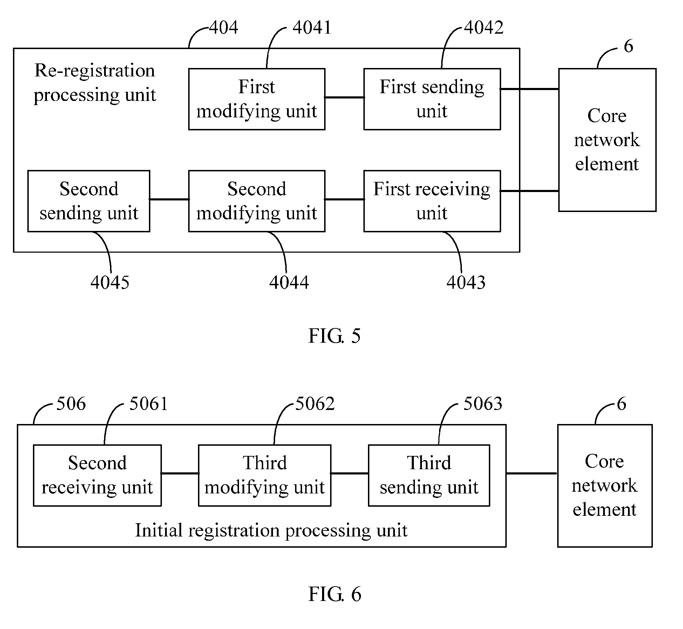

As shown in FIG. 5, the re-registration processing unit 404 may include:
a first modifying unit 4041, adapted to modify the user registration duration carried in the re-registration request to the core network registration duration which is preset if the re-registration judging unit 403 determines that re-registration with the core network element is required;
a first sending unit 4042, adapted to send the re-registration request modified by the first modifying unit 4041 to the core network element;
a first receiving unit 4043, adapted to receive a response message returned by the core network element, where the response message carries the core network registration duration;
a second modifying unit 4044, adapted to modify the core network registration duration carried in the response message received by the first receiving unit 4043 to the user registration duration recorded by the re-registration recording unit 402; and
a second sending unit 4045, adapted to send the response message modified by the second modifying unit 4044 to the terminal.

As shown in FIG. 4, the Outbound-Proxy may further include:
an initial registration receiving unit 501, adapted to receive an initial registration request sent by a terminal, where the initial registration request carries a user registration duration;
an initial registration recording unit 502, adapted to record the user registration duration carried in the initial registration request received by the initial registration receiving unit 501;
an initial registration judging unit 503, adapted to judge whether the user registration duration carried in the initial registration request received by the initial registration receiving unit 501 is less than the preset core network registration duration;
an initial registration modifying unit 504, adapted to modify the user registration duration carried in the initial registration request to the core network registration duration if the initial registration judging unit 503 determines that the user registration duration is less than the preset core network registration duration;
an initial registration sending unit 505, adapted to: send the initial registration request modified by the initial registration modifying unit 504 to the core network element; or, forward the initial registration request to the core network element if the initial registration judging unit 503 determines that the user registration duration is greater than or equal to the preset core network registration duration; and
a registration processing unit 506, adapted to receive a response message that indicates success and is returned by the core network element and forward the response message to the terminal.

As shown in FIG. 6, the initial registration processing unit 506 may include:
a second receiving unit 5061, adapted to receive a response message that indicates success and is returned by the core network element, where the response message carries the core network registration duration;
a third modifying unit 5062, adapted to modify the core network registration duration carried in the response message received by the second receiving unit 5061 to the user registration duration recorded by the registration recording unit 502; and
a third sending unit 5063, adapted to send the response message that indicates success and is modified by the third modifying unit 5062 to the terminal.

The Outbound-Proxy may be a P-CSCF, an SBC, an IBCF or another network element that is capable of implementing similar functions; the core network element may be an S-CSCF, an AS, a combination of the S-CSCF and other network elements, or may be another network element capable of implementing registration.

For clearer illustration, FIG. 4, FIG. 5 and FIG. 6 show another network element, namely, a core network element 6. The core network element 6 is not a part of the Outbound-Proxy provided herein.

A communication system provided in an embodiment of the present invention includes any Outbound-Proxy disclosed herein.

In conclusion, in this embodiment, the Outbound-Proxy receives a re-registration request sent by the terminal, and judges whether re-registration with the core network element is required according to the user registration duration carried in the re-registration request; if determining that re-registration is required, the Outbound-Proxy modifies the user registration duration carried in the re-registration request to the preset core network registration duration, namely, to the registration duration which is longer, and then sends the modified re-registration request to the core network element to perform re-registration, therefore reducing signaling traffic between the Outbound-Proxy and the core network element, namely, reducing information amount of the re-registration requests received by the core network element, and slashing the load on the core network element caused by frequent re-registration of the terminal. Because the response message returned to the terminal is an ordinary response message such as a 200 response message, no special requirement is imposed on the type of terminal.

In addition, because the Outbound-Proxy can modify the core network registration duration carried in the response message returned by the core network element to the user registration duration carried in the original re-registration request and then send the modified response message to the terminal, the impact on the frequency of re-registration of the terminal is avoided, and the performance of the terminal is maintained. The solution provided in this embodiment involves no change to the terminal.

In the initial registration of the terminal, the Outbound-Proxy may check the received initial registration request. If determining that the user registration duration carried in the initial registration request is less than the preset core network registration duration, the Outbound-Proxy modifies the user registration duration carried in the initial registration request to the core network registration duration, and then forwards the request to the core network element, therefore prolonging the user registration duration stored in the core network element and getting ready for processing the re-registration request sent by the terminal subsequently at intervals, reducing the information amount of re-registration requests received by the core network element and relieving the load on the core network element.

To sum up, the embodiments of the present invention bring the following benefits:
In the initial registration of the terminal, the Outbound-Proxy may check the received initial registration request. If determining that the user registration duration carried in the initial registration request is less than the preset core network registration duration, the Outbound-Proxy modifies the user registration duration carried in the initial registration request to the core network registration duration, and then forwards the request to the core network element, therefore prolonging the user registration duration stored in the core network element and getting ready for processing the re-registration request sent by the terminal subsequently at intervals. In the re-registration of the terminal, the Outbound-Proxy judges whether re-registration with the core network element is required according to the received re-registration request; if determining that re-registration is required, the Outbound-Proxy modifies the user registration duration carried in the re-registration request to the preset core network registration duration, namely, to the registration duration which is longer, and then forwards the modified re-registration request to the core network element, therefore reducing the signaling traffic between the Outbound-Proxy and the core network element, namely, reducing the information amount of the re-registration requests received by the core network element, and slashing the load on the core network element caused by frequent re-registration of the terminal. In addition, because the response message returned to the terminal is an ordinary response message such as a 200 response message, no special requirement is imposed on the terminal. By comparison, the 423 response message returned in the prior art is restricted by the terminal type.

In addition, because the Outbound-Proxy may modify the core network registration duration carried in the response message returned by the core network element to the user registration duration carried in the original re-registration request and then send the modified response message to the terminal, the impact on the frequency of re-registration of the terminal is avoided, and the performance of the terminal is maintained. The solution provided in this embodiment involves no change to the terminal.

Persons of ordinary skill in the art should understand that all or part of the steps of the method in the embodiments of the present invention may be implemented by a program instructing relevant hardware. The program may be stored in a computer readable storage medium. The storage medium may be a Read Only Memory (ROM), a Random Access Memory (RAM), a magnetic disk, or a Compact Disk-Read Only Memory (CD-ROM).

Described above are a registration method, an Outbound-Proxy, and a communication system under the present invention. Although the invention is described through some exemplary embodiments, the invention is not limited to such embodiments. It is apparent that those skilled in the art can make modifications and variations to the invention without departing from the scope of the invention. The invention is intended to cover the modifications and variations provided that they fall within the scope of protection defined by the following claims or their equivalents.

## Claims

1. A registration method, comprising:
receiving a re-registration request sent by a terminal, wherein the request carries a user registration duration;
judging, according to the re-registration request, whether re-registration with a core network element is required;
if re-registration with the core network element is required, modifying the user registration duration carried in the re-registration request to a core network registration duration which is preset, sending the modified re-registration request to the core network element, and receiving a response message returned by the core network element and forwarding the response message to the terminal; and
if re-registration with the core network element is not required, returning a response message to the terminal.

2. The registration method according to claim 1, wherein the judging, according to the re-registration request, whether re-registration with the core network element is required comprises:
judging whether a duration between previous core network registration and current re-registration is greater than a preset fixed duration, and if the duration is greater than the preset fixed duration, determining that the re-registration with the core network element is required, or if the duration is not greater than the preset fixed duration, determining that re-registration with the core network element is not required, wherein the fixed duration is equal to the core network registration duration or a difference between the core network registration duration and a margin; or
judging whether a sum of the user registration duration carried in the re-registration request and time counted on a timer or a sum of the user registration duration, the time counted on the timer, and a margin is greater than the preset core network registration duration, and if the sum is greater than the preset core network registration duration, determining that the re-registration with the core network element is required, or if the sum is not greater than the preset core network registration duration, determining that re-registration with the core network element is not required, wherein the timer is started when the timer succeeds in initially registering on the terminal, and the timer is reset to zero to count time again after success of each re-registration; or
judging whether the user registration duration carried in the re-registration request is greater than a duration counted on the timer; if the user registration duration is greater than the duration counted on the timer, determining that re-registration with the core network element is required; if the user registration duration is not greater than the duration counted on the timer, determining that re-registration with the core network element is not required, wherein: the timer is a decreasing timer, and an initial duration of the timer is set to the core network registration duration or the difference between the core network registration duration and the margin; the timer starts counting down when the timer succeeds in initially registering on the terminal, and the initial duration of the timer is reset after success of each re-registration.

3. The registration method according to claim 1 or claim 2, wherein after the receiving the re-registration request sent by the terminal, the method further comprises:
recording the user registration duration carried in the re-registration request.

4. The registration method according to claim 3, wherein the receiving the response message returned by the core network element and forwarding the response message to the terminal is:
receiving the response message returned by the core network element, wherein the response message carries the core network registration duration;
modifying the core network registration duration carried in the response message to the recorded user registration duration; and
sending the modified response message to the terminal.

5. The registration method according to claim 1, wherein before the receiving the re-registration request sent by the terminal, the method further comprises:
receiving an initial registration request sent by the terminal, wherein the initial registration request carries the user registration duration;
judging whether the user registration duration is less than the preset core network registration duration;
if the user registration duration is less than the preset core network registration duration, modifying the user registration duration carried in the initial registration request to the core network registration duration, and sending the modified initial registration request to the core network element;
if the user registration duration is not less than the preset core network registration duration, forwarding the initial registration request to the core network element; and
receiving the response message returned by the core network element and forwarding the response message to the terminal.

6. The registration method according to claim 5, wherein after the receiving the initial registration request sent by the terminal, the method further comprises:
recording the user registration duration carried in the initial registration request.

7. The registration method according to claim 6, wherein the receiving the response message returned by the core network element and forwarding the response message to the terminal is:
receiving the response message returned by the core network element, wherein the response message carries the core network registration duration;
modifying the core network registration duration carried in the response message to the recorded user registration duration; and
sending the modified response message to the terminal.

8. An Outbound-Proxy, comprising:
a re-registration receiving unit, adapted to receive a re-registration request sent by the terminal, wherein the re-registration request carries a user registration duration;
a re-registration judging unit, adapted to judge, according to the re-registration request received by the re-registration receiving unit, whether re-registration with a core network element is required;
a re-registration processing unit, adapted to: if the re-registration judging unit determines that re-registration with the core network element is required, modify the user registration duration carried in the re-registration request to a core network registration duration which is preset, send the modified re-registration request to the core network element, and receive a response message returned by the core network element and forward the response message to the terminal; and
a re-registration sending unit, adapted to return a response message to the terminal if the re-registration judging unit determines that re-registration with the core network element is not required.

9. The Outbound-Proxy according to claim 8, further comprising:
a re-registration recording unit, adapted to record the user registration duration carried in the re-registration request received by the re-registration receiving unit.

10. The Outbound-Proxy according to claim 9, wherein the re-registration processing unit comprises:
a first modifying unit, adapted to modify the user registration duration carried in the re-registration request to the preset core network registration duration if the re-registration judging unit determines that re-registration with the core network element is required;
a first sending unit, adapted to send the re-registration request modified by the first modifying unit to the core network element;
a first receiving unit, adapted to receive the response message returned by the core network element, wherein the response message carries the core network registration duration;
a second modifying unit, adapted to modify the core network registration duration carried in the response message received by the first receiving unit to the user registration duration recorded by the re-registration recording unit; and
a second sending unit, adapted to send the response message modified by the second modifying unit to the terminal.

11. The Outbound-Proxy according to claim 9 or claim 10, further comprising:
an initial registration receiving unit, adapted to receive an initial registration request sent by the terminal, wherein the initial registration request carries the user registration duration;
an initial registration judging unit, adapted to judge whether the user registration duration carried in the initial registration request received by the initial registration receiving unit is less than the preset core network registration duration;
an initial registration modifying unit, adapted to modify the user registration duration carried in the initial registration request to the core network registration duration if the initial registration judging unit determines that the user registration duration is less than the preset core network registration duration;
an initial registration sending unit, adapted to: send the initial registration request modified by the initial registration modifying unit to the core network element, or, forward the initial registration request to the core network element if the initial registration judging unit determines that the user registration duration is greater than or equal to the preset core network registration duration; and
an initial registration processing unit, adapted to receive the response message returned by the core network element and forward the response message to the terminal.

12. The Outbound-Proxy according to claim 11, further comprising:
an initial registration recording unit, adapted to record the user registration duration carried in the initial registration request received by the initial registration receiving unit.

13. The Outbound-Proxy according to claim 12, wherein the initial registration processing unit comprises:
a second receiving unit, adapted to receive the response message returned by the core network element, wherein the response message carries the core network registration duration;
a third modifying unit, adapted to modify the core network registration duration carried in the response message received by the second receiving unit to the user registration duration recorded by the initial registration recording unit; and
a third sending unit, adapted to send the response message modified by the third modifying unit to the terminal.

14. The Outbound-Proxy according to any one of claims 8-13, wherein:
the Outbound-Proxy is a Proxy Call Session Control Function (P-CSCF), a Session Border Controller (SBC), or an Interconnect Bounder Control Function (IBCF).

15. A communication system, comprising any Outbound-Proxy according to claims 8-14.
